# EUROPÄISCHE PATENTSCHRIFT

(11) **EP 1 709 860 B1**
(45) Veröffentlichungstag und Bekanntmachung des Hinweises auf die Patenterteilung: **07.05.2008**
(21) Anmeldenummer: 06005232.1
(22) Anmeldetag: 15.03.2006
(51) Int. Cl.: A01D 43/08

(54) **Mäh- und Fördereinrichtung für stängeliges Erntegut**
Cutting and feeding device for stem crop
Dispositif de coupe et d'alimentation pour récolte de plantes à tiges

(30) Priorität: 08.04.2005 DE 202005005700 U
(43) Veröffentlichungstag der Anmeldung: 11.10.2006
(73) Patentinhaber: CLAAS Saulgau GmbH, 88348 Bad Saulgau (DE)
(72) Erfinder: Albinger, Bernd, 88454 Hochdorf (DE); Gebele, Josef, 88348 Bad Saulgau (DE); Loebe, Stefan, 88348 Bad Saulgau (DE); Maier, Martin, 72513 Hettingen (DE); Rauch, Hans, 88348 Bad Saulgau (DE); Unger, Josef, 88356 Ostrach (DE)

(56) Entgegenhaltungen:
- DE-A1- 3 623 380
- DE-A1- 10 249 457
- DE-A1- 19 939 168
- US-A- 5 845 472

## Beschreibung

Die Erfindung betrifft eine Mäh- und Fördereinrichtung für stängeliges Erntegut nach dem Oberbegriff des Anspruchs 1.

In Verbindung mit Feldhäckslem und deren Vorsatzgeräte sind Mäh- und Fördereinrichtungen zum Mähen von stängeligem Halmgut, wie beispielsweise Mais, mit um aufrechte Achsen umlaufenden Mäh- und Förderwerkzeugen bekannt.

Gattungsbildende Ausführungsbeispiele für ein umlaufend angetriebenes Mäh- und Fördersystem von Vorsatzgeräten zum Ernten von stängeligem Erntegut sind beispielsweise in der DE 196 39 805 und DE 102 30 236 dargestellt. Diese Art der Vorsatzgeräte werden von Feldhäckslern frontseitig aufgenommen und sie mähen die stängeligen Pflanzen bodennah ab und fördern sie in den Einzugsschacht des Häckslers.

Die in der DE 196 39 805 und DE 102 30 236 beschriebene Mäh- und Fördereinrichtung besteht aus quer zur Fahrtrichtung nebeneinander in einem Rahmengestell gelagerten Mäh- und Förderrotoren, deren Förderrotoren Ausbuchtungen aufweisen, welche die abgemähten Stängel aufnehmen und auf einem Teilstück der Umlaufbahn halten und diese im hinteren Bereich wieder freigeben, damit sie an den Einzugsspalt des Häckslers weitergeleitet werden können.

Ein Mäh- und Förderrotor besteht aus einer unten liegenden Schneidscheibe und darüber liegend auf einer gemeinsamen Antriebswelle aus zwei in Abstand zueinander befindlichen Förderscheiben, die übereinanderliegende Ausbuchtungen aufweisen. Zur Unterstützung der Übergabe der abgemähten Maisstängel an die Förderscheiben der Fördertrommeln sind den Mäh- und Förderrotoren Stängelheber mit Führungselementen vorgelagert, welche die Maisstängel in Ausbuchtungen hineindrängen.

Bei Vorsatzgeräten dieser Art mit größeren Arbeitsbreiten, beispielsweise ab ca. 6m Arbeitsbreite aufwärts, sind diese mit angetriebenen Querfördereinrichtungen hinter den Mäh- und Förderrotoren ausgestattet, welche den Quertransport der abgemähten Maispflanzen in Richtung Einzugsschacht verbessern und diesen damit prozesssicherer machend unterstützen. Diese Querfördereinrichtungen stellen einen erheblichen technischen Aufwand mit erheblichen Kosten und Wartungsaufwand dar. Hier setzt die Erfindung an mit dem Ziel, diesen technischen Aufwand zu reduzieren um damit das Vorsatzgerät kostengünstiger zu gestalten und um damit gleichzeitig die Wirtschaftlichkeit des Vorsatzgerätes zu erhöhen.

Die **Aufgabe der Erfindung** ist es daher, eine Mäh- und Fördereinrichtung eines Vorsatzgerätes zum mähen von stängeligem Erntegut mit großen Arbeitsbreiten prozesssicherer gestaltend zu verbessern, um damit den Verlust von Erntegut während des Ernteprozesses zu reduzieren. Dabei soll der technische Aufwand einfach und damit kostengünstig sein, um damit die Wirtschaftlichkeit des Vorsatzgerätes und des Ernteprozesses zu erhöhen.

Gelöst wird die Aufgabe der Erfindung mit den kennzeichnenden Merkmalen des unabhängigen Anspruchs1 nach der Erfindung. Weitere vorteilhafte Ausgestaltungen der Erfindung sind den abhängigen Ansprüchen, der Beschreibung und den Figurendarstellungen zu entnehmen.

Erfindungsgemäß wird dieses dadurch herbeigeführt, dass wenigstens zwei außenliegende Mäh- und Förderrotoren gleichsinnig drehen, wobei der jeweils weiter außenliegende Förderrotor die abgemähten Stängel an den benachbarten weiter innenliegenden Förderrotor frontseitig übergibt, und wobei in dem Zwickelbereich der benachbarten Förderrotore, welche den Übergabebereich definieren, ein Führungselement für eine sichere Übergabe der Maispflanzen von einem Förderrotor zum benachbarten Förderrotor sorgt. Dieses macht die Querfördereinrichtung im hinteren Bereich dieser Mäh- und Einzugsrotoren entbehrlich, welches gleichermaßen den erforderlichen Antriebsaufwand hinsichtlich der Antriebsstränge mit deren rotierenden Teilen und daran gekoppelt die Leistungsaufnahme reduzierend günstig beeinflusst.

### Bezugszeichenliste

- 1: Vorsatzgerät
- 2,2': Mäh- und Förderrotor (Mäh- und Fördereinheit)
- 3: Mäh- und Förderrotor (Mäh- und Fördereinheit)
- 4: Förderrichtung, Drehbewegung, Drehsinn
- 5: Förderrichtung, Drehbewegung, Drehsinn
- 6: Messerscheibe
- 7: Förderscheibe
- 8: Fördertasche
- 9: Winkelgetriebe
- 10: Rahmenrohr
- 11: Winkelgetriebe
- 12: Rotationsachse
- 13: Einspeisetrommel
- 14: Einzugswalze
- 15: Umlenk- und Führungselement (Stängelheber)
- 16: Führungsfinger
- 17: Längsmittelebene
- 18: Maschinengestell
- 19: Feldhäcksler, Vorderrad
- 20: Presskanal u. Einzugsgehäuse
- 21: äußere Förderspur
- 22: innere Förderspur
- 23: Zwickelbereich
- 24: Zwickelbereich
- 25: Querförderrichtung
- 26: Querförderrichtung
- 27: Einzugsrichtung
- 28: Ausräumer
- 29: Ausräumer
- 30: Ausräumer
- 31: Mäh und Arbeitsbreite
- 32: halbe Mäh- und Arbeitsbreite

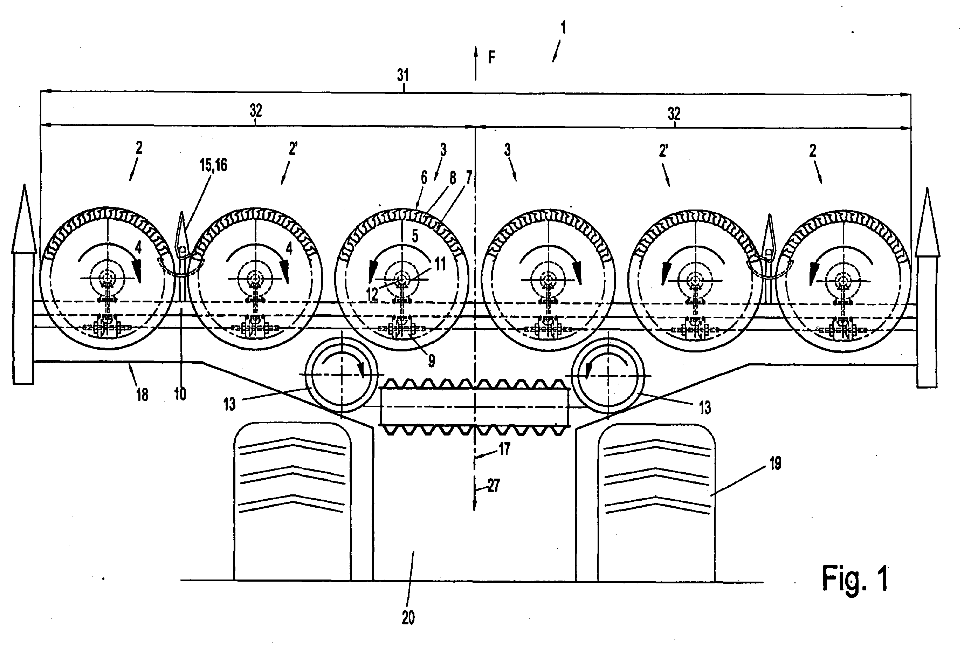

In Fig. 1 ist ein Vorsatzgerät 1 für einen Mais- bzw. Feldhäcksler 19 in bekannter Bauweise in einer Draufsicht auf die Arbeitsebene vereinfacht dargestellt. Beidseitig der Längsmittelebene 17 des Vorsatzgerätes 1 sind je drei Mäh- und Förderrotore 2,2',3 dargestellt, die jeweils um ihre aufrechte Rotationsachse 12, mit ihrer jeweiligen Dreh- und Förderrichtung 4,5 umlaufend von dem Kegelradgetriebe 11 angetrieben sind. Dabei sind die Mäh- und Förderrotore 2,2',3 quer zur Fahrtrichtung F und nebeneinander angeordnet. Die Dreh- und Förderrichtungen 4,5 sind durch Drehrichtungspfeile gekennzeichnet. Das Vorsatzgerät ist spiegelsymmetrisch zur Längsmittelebene 17 aufgebaut.

Die Winkelgetriebe 12 aufnehmenden Mäh- und Förderrotore 2,2',3 sind innerhalb eines Maschinengestells 18 an einem Rahmenrohr 10 angeflanscht und sie werden von einem Antriebstrang, der quer zur Fahrtrichtung verläuft und der aus weiteren Winkelgetrieben 9 besteht, die ebenfalls an dem Rahmenrohr 10 angeflanscht sind und die von einer gemeinsamen nicht näher dargestellten Antriebswelle durchsetzt sind, angetrieben. Diese weitere Ausgestaltung des Antriebs ist dem Fachmann bekannt und es ist daher an dieser Stelle nicht erforderlich näher darauf einzugehen.

Derartige Mäh- und Förderrotore 2,2',3 bestehen in bekannter weise aus einer Messerscheibe 6 und darüber liegend koaxial zur Rotationsachse 12 zwei höhenmäßig zueinander beabstandeten Förderscheiben 7, welche an ihrem Umfang Fördertaschen 8 zum Halten und Führen der Maistängel aufweisen.

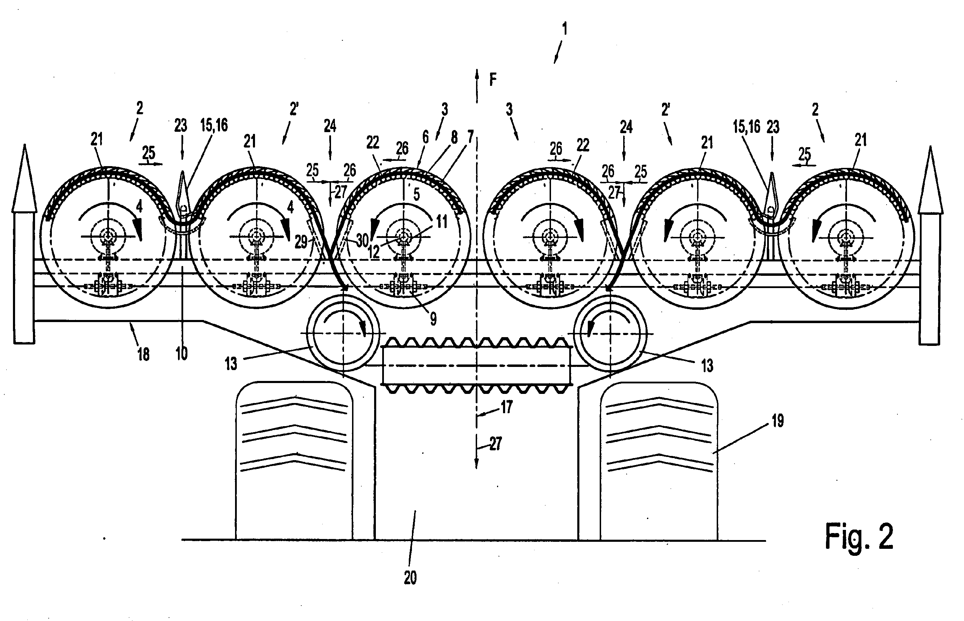

Fig. 2 zeigt die gleiche Ansicht, wie in Fig. 1 dargestellt, jedoch ist in dieser Darstellung der Verlauf des Förderstroms der abgemähten und von den Fördertaschen aufgenommenen Maisstängeln in Form einer Förderspur 21,22 dargestellt. Die beiden ausliegenden Mäh- und Förderrotore 2,2' drehen gleichsinnig in der Art, dass die Maisstängel der abgemähten Maispflanzen in den Fördertaschen 8 der Förderrotore 2,2' aufgenommen werden und frontseitig auf dem Umfang der Förderspur in die Querförderichtung 25 in Richtung der Längsmittelebenen 17 bewegt werden. Da die Maispflanzenstängel dabei gleichzeitig in den Fördertaschen der Förderotören 2,2' gefangen sind, nehmen sie gleichzeitig an der Drehbewegung 4 der Förderotore 2 bzw. 2' teil, so dass die Maispflanzen im Zwickelbereich 23 auch gleichzeitig eine Bewegungsrichtung in Richtung der Einzugsrichtung 27 ausgesetzt sind. Damit nähern sie sich aber gleichzeitig auch dem benachbarten Förderotor 2', an dem sie übergeben werden sollen. Dieses geschieht dadurch, das der Ausräumer 28, ausgebildet als tangential angestellter Abstreifer in den Zwischenraum zwischen den beabstandeten Förderscheiben 7 eindringt, und die Maistängel somit aus den Fördertaschen 8 herausdrängt. In der Tiefe des Zwickelraums 23 befindet sich nun eine Umlenkelement und Führungselement 15, vorzugsweise ausgebildet als an sich bekannter Stängelheber mit einem Führungsfinger 16, der zugleich die Funktion der Übergabe der Maisstängel an den benachbarte Förderrotor 2' übernimmt, so dass nunmehr die Maisstängel in die Fördertaschen 8 des Förderotors 2' hineingedrängt werden, und von diesem auf dessen Umfang auf der äußeren Förderspur 21 in die Querförderichtung 25 weiter transportiert werden. Dabei werden gleichzeitig die vom Mäh- und Förderrotor 2' abgemähten Maispflanzen ebenfalls von den Fördertaschen 8 des Mäh- und Förderotors 2' ebenfalls aufgenommen und weiter gefördert.

Analog verhält es sich mit dem Mäh- und Förderrotor 3, der mit entgegengesetzter Drehrichtung 5 zu den jeweils ihm benachbarten und außenliegenden Förderrotoren 2,2' umläuft, indem er seine abgemähten Maispflanzen ebenfalls in seine Fördertaschen 8 aufnimmt, die Maispflanzen dann aber auf die ihm zugeordnete innere Förderspur 22 weg von der Längsmittelebene 17 in die Querförderrichtung 26 bewegt. Damit treffen dann beide Förderströme der Maispflanzen der Förderspuren 21,22 der jeweiligen einen Hälfte mit der Mähbreite 32 der gesamten Mäh- und Arbeitsbreite 31 in dem jeweiligen beidseits der Hauptlängsmittelebene 17 befindlichen Zwickelbereich 24 zwischen den Mähscheiben 2',3 aufeinander, die dann von den Ausräumern 29,30 aus den Mäh. Und Förderrotoren 2',3 ausgeräumt und damit zusammen geführt werden. Der so vereinigte Förderstrom trifft dann auf die jeweilige Einspeisetrommeln 13 auf und wird dadurch an die Einzugswalzen 14 des Presskanals des Einzugsgehäuse 20 herangeführt und an den Häckslers übergeben.

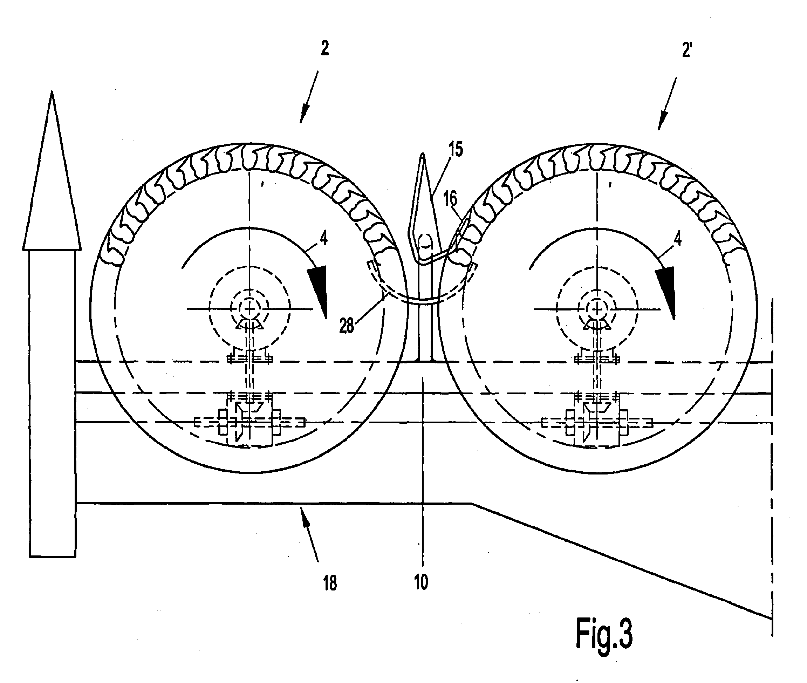

Fig. 3a zeigt eine zum besseren Verständnis eine Vergrößerung des Zwickelbereiches 23 mit dessen Führungselement 15 und dessen Führungsfinger 16. selbstverständlich können dabei durchaus weitere Stängelheber mit Führungselemente im Frontbereich des Umfangs eines Mäh- und Förderrotors angebracht sein, welche dann in bekannter weise den Einfädelungsprozess der Maisstängel in die Fördetaschen unterstützen.

Ein Vorsatzgerät nach der Erfindung ist keineswegs auf sechs Mäh- und Fördereinheiten im Sinne von Mäh- und Förderrotoren beschränkt, wie in dem Ausführungsbeispiel zuvor dargelegt, es umfast jedoch mindesten vier Einheiten von Mäh- und Fördereinheiten und ist nach oben hin lediglich durch bauliche Grenzen eingeschränkt.

## Patentansprüche

1. Vorsatzgerät (1) zum Ernten von stängeligem Erntegut mit wenigstens zwei benachbarten gleichsinnig umlaufend angetriebenen Mäh- und Fördereinrichtungen, die in ihrem frontseitigen Zwickelbereich einen Übergabebereich zur Übergabe der Maispflanzen definieren, **dadurch gekennzeichnet, dass** innerhalb des frontseitigen Zwickelbereichs (23) ein Umlenk- und Führungselement (16) angeordnet ist, welches den benachbarten Mäh- und Fördereinrichtungen (2,2') derart zugeordnet ist, dass dieses die Übgabe des stängeligen Emteguts längs der Förderspur (21) von der jeweils weiter außenliegenden Mäh- und Fördereinheit (2) zur benachbarten weiter innenliegenden Mäh- und Fördereinheit (2') unterstützt, wobei die weiter außenliegende Fördereinheit (2) die abgemähten Stängel an die benachbarte weiter innenliegende Fördereinheit (2') frontseitig übergibt.

2. Vorsatzgerät (1) für Feldhäcksler nach Anspruch 1, **dadurch gekennzeichnet, dass** das Übergabeelement 16 als Stängelheber mit Führungsfinger (16) ausgebildet ist.

3. Vorsatzgerät (1) für Feldhäcksler nach Anspruch 1, **dadurch gekennzeichnet, dass** den wenigstens zwei gleichsinnig umlaufenden Mäh- und Fördereinrichtungen (2,2') wenigstens eine weitere Mäh- und Förderrotor (3) mit entgegengesetztem Drehsinn zugeordnet ist.

4. Vorsatzgerät (1) für Feldhäcksler nach einem der Ansprüche Anspruch 1 bis 3, **dadurch gekennzeichnet, dass** die gesamte Mäh- und Fördereinrichtung wenigstens vier Mäh- und Fördereinheiten umfasst.

5. Vorsatzgerät (1) für Feldhäcksler nach einem der Ansprüche Anspruch 1 bis 3, **dadurch gekennzeichnet, dass** die Förderströme der äußeren Förderspur (21) und der inneren Förderspur (22) in einem Zwickelbereich .(24) zusammengeführt und dem Einzugswalzen (14) des Presskanals des Einzugsgehäuses (20) eines Häckslers zugeführt werden.

## Claims

1. A front-mounted implement (1) for harvesting stalked crop material comprising at least two adjacent cutting and conveyor devices which are driven in rotation in opposite directions and which in their front nip region define a transfer region for the transfer of the corn plants, **characterised in that** arranged within the nip region (23) at the front side is a deflection and guide element (16) associated with the adjacent cutting and conveyor devices (2, 2') in such a way that it assists with transfer of the stalked crop material along the conveyor path (21) from the respective further outwardly disposed cutting and conveyor unit (2) to the adjacent further inwardly disposed cutting and conveyor unit (2'), wherein the further outwardly disposed conveyor unit (2) transfers the cut stalks to the adjacent further inwardly disposed conveyor unit (2') at the front side.

2. A front-mounted implement (1) for forage harvesters according to claim 1 **characterised in that** the transfer element (16) is in the form of a stalk lifter with a guide finger (16).

3. A front-mounted implement (1) for forage harvesters according to claim 1 **characterised in that** associated with the at least two cutting and conveyor devices (2, 2') which rotate in opposite directions is at least one further cutting and conveyor rotor (3) involving the opposite direction of rotation.

4. A front-mounted implement (1) for forage harvesters according to one of claims 1 to 3 **characterised in that** the entire cutting and conveyor device includes at least four cutting and conveyor units.

5. A front-mounted implement (1) for forage harvesters according to one of claims 1 to 3 **characterised in that** the conveyor flows of the outer conveyor path (21) and the inner conveyor path (22) are brought together in a nip region (24) and are fed to the intake roller (14) of the pressing passage of the intake housing (20) of a chaff cutter.

## Revendications

1. Outil frontal (1) pour récolter du produit de récolte en tiges, comprenant au moins deux dispositifs de moissonnage et d'amenée voisins, entraînés en rotation dans le même sens, qui définissent dans leur zone cunéiforme frontale une zone de transfert pour transférer les pieds de maïs, **caractérisé en ce qu'**à l'intérieur de la zone cunéiforme frontale (23) est disposé un élément de déviation et de guidage (16) qui est associé aux dispositifs voisins de moissonnage et d'amenée (2, 2'), de façon à favoriser le transfert de produit de récolte en tiges suivant la piste d'amenée (21) de l'unité de moissonnage et d'amenée extérieure (2) à l'unité de moissonnage et d'amenée intérieure voisine (2'), l'unité d' amenée extérieure (2) transférant frontalement les tiges moissonnées à l'unité d'amenée intérieure voisine (2') .

2. Outil frontal (1) pour ensileuses selon la revendication 1, **caractérisé en ce que** l'élément de transfert 16 est conformé en releveur de tiges avec doigt de guidage (16).

3. Outil frontal (1) pour ensileuse selon la revendication 1, **caractérisé en ce qu'**aux au moins deux dispositifs de moissonnage et d'amenée (2, 2') tournant dans le même sens est associé au moins un rotor supplémentaire de moissonnage et d'amenée (3) à sens de rotation opposé.

4. Outil frontal (1) pour ensileuses selon une des revendications 1 à 3, **caractérisé en ce que** le dispositif de moissonnage et d'amenée comprend au total au moins quatre unités de moissonnage et d'amenée.

5. Outil frontal (1) pour ensileuse selon une des revendications 1 à 3, **caractérisé en ce que** les flux d'amenée de la piste d'amenée extérieure (21) et de la piste d'amenée intérieure (22) sont regroupés dans une zone cunéiforme (24) et dirigés vers le tambour d'introduction (14) du canal de compression du carter d'introduction (20) d'une ensileuse.
